# EUROPÄISCHE PATENTSCHRIFT

(11) **EP 3 494 054 B1**
(45) Veröffentlichungstag und Bekanntmachung des Hinweises auf die Patenterteilung: **02.06.2021**
(21) Anmeldenummer: 17745258.8
(22) Anmeldetag: 27.07.2017
(51) Int. Cl.: B65B 57/00, B65B 59/04, G05B 19/042, B65B 19/28, G05B 19/05

(54) **VERPACKUNGSMASCHINE SOWIE VERFAHREN ZUM BEREITSTELLEN EINES STEUERPROGRAMMS FÜR DIESE**
PACKAGING MACHINE AND METHOD FOR PROVIDING A CONTROL PROGRAM THEREFOR
MACHINE D'EMBALLAGE ET PROCÉDÉ DE PRÉPARATION D'UN PROGRAMME DE COMMANDE ASSOCIÉ

(30) Priorität: 04.08.2016 DE 102016009406
(43) Veröffentlichungstag der Anmeldung: 12.06.2019
(73) Patentinhaber: Focke & Co. (GmbH & Co. KG), 27283 Verden (DE)
(72) Erfinder: MÖLLER, Thomas, 28857 Syke (DE)
(74) Vertreter: Aulich, Martin
(86) Internationale Anmeldenummer: PCT/EP2017/000909
(87) Internationale Veröffentlichungsnummer: WO 2018/024365

(56) Entgegenhaltungen:
- EP-A1- 2 298 653
- EP-A1- 2 866 105
- EP-A2- 1 645 513
- DE-A1- 10 012 579
- DE-A1-102004 015 240
- DE-A1-102012 004 341
- US-A1- 2009 018 690
- US-A1- 2012 031 040
- MONIKA WENGER ET AL: "Utilizing IEC 61499 in an MDA control application development approach", AUTOMATION SCIENCE AND ENGINEERING (CASE), 2011 IEEE CONFERENCE ON, IEEE, 24. August 2011 (2011-08-24), Seiten 495-500, XP031975807, DOI: 10.1109/CASE.2011.6042458 ISBN: 978-1-4577-1730-7

## Beschreibung

Die vorliegende Erfindung betrifft eine Verpackungsmaschine aus mehreren Maschinenmodulen sowie ein Verfahren zum Bereitstellen eines Steuerprogramms für eine solche Verpackungsmaschine.

Im Zusammenhang mit der Herstellung von Zigarettenpackungen besteht ein immer größerer Bedarf, die hierfür eingesetzten Verpackungsmaschinen schnell und mit möglichst geringem Aufwand an grundlegend unterschiedliche Packungsarten anpassen zu können, ohne hierfür aufwendige Umbaumaßnahmen vornehmen zu müssen. Modular aufgebaute Maschinen mit mehreren Maschinenmodulen sind dabei von großem Vorteil. Besonderes Augenmerk ist dabei auf das Steuerungsprogramm für eine solche Verpackungsmaschine zu richten. Im Stand der Technik muss bei einer Änderung bzw. einem Wechsel eines einzelnen Moduls das gesamte Steuerungsprogramm aufwändig händisch angepasst und geprüft werden.

Aus der EP 1 645 513 A2 ist außerdem eine modulare Verpackungsmaschine bekannt, bei der einzelne, individuell konfigurierbare Module miteinander interagieren. Die Module können manuell an verschiedene Verpackungsprozesse angepasst werden und Module können so flexibel hinzugefügt oder entfernt werden.

Ausgehend hiervon ist es Aufgabe der vorliegenden Erfindung, ein Steuerungsprogramm für eine Verpackungsmaschine mit einem modularen Aufbau in möglichst einfacher Weise bereitstellen zu können.

Diese Aufgabe wird gelöst durch ein Verfahren mit den Merkmalen des Anspruchs 1 sowie eine Verpackungsmaschine mit den Merkmalen des Anspruchs 15.

Danach wird ein Verfahren angegeben zum Bereitstellen eines Steuerungsprogramms für eine Verpackungsmaschine aus mehreren Maschinenmodulen, insbesondere eine Verpackungsmaschine zur Herstellung von Verpackungen für Tabakprodukte, bei dem bei oder vor einer Inbetriebnahme der Verpackungsmaschine, insbesondere bei oder vor einer Inbetriebnahme nach einem Austausch eines Maschinenmoduls oder bei oder vor einer Erstinbetriebnahme, den Maschinenmodulen jeweils eindeutig zugeordnete Steuerungsteilprogramme zum Betreiben des jeweiligen Maschinenmoduls mithilfe einer der Verpackungsmaschine zugeordneten zentralen Computer- oder Recheneinrichtung automatisiert zu einem (lauffähigen bzw. selbstständig lauffähigen) Steuerungshauptprogramm zusammengesetzt werden, mit dem dann die Verpackungsmaschine gesteuert wird bzw. gesteuert werden kann.

Erfindungsgemäß werden die Steuerungsteilprogramme dementsprechend jeweils in ein Steuerungshauptproramm zur Steuerung der Verpackungsmaschine eingebunden bzw. zu einem solchen zusammengesetzt. Sie gehen bei bzw. nach dem Zusammensetzen der einzelnen Steuerungsteilprogramme zu dem Steuerungshauptprogramm durch die zentrale Computer- bzw. Recheneinrichtung in dem Steuerungshauptprogramm auf bzw. bilden jeweils einen Bestandteil desselben.

Die Steuerungsteilprogramme sind dabei nicht selbstständig oder eigenständig lauffähig. Also nicht ohne die erfindungsgemäße Einbindung in ein/das Steuerungshauptprogramm. Sie sind daher nicht geeignet, die jeweiligen Maschinenmodule, denen sie zugeordnet sind, eigenständig bzw. alleine zu steuern, sondern nur - nach der Einbindung - innerhalb des Rahmens des Steuerungshauptprogramms.

Was das vorgenannte (automatische) Zusammensetzen des Steuerungshauptprogramms aus den Steuerungsteilprogrammen betrifft, so verfügt die zentrale Recheneinrichtung bevorzugt über ein entsprechend für den vorliegenden Anwendungsfall individualisiertes, im Stand der Technik im grundsätzlichen Aufbau bzw. der grundsätzlichen Funktionsweise allerdings bekanntes Programm zur (automatischen) Erstellung eines Hauptprogramms aus einzelnen, nicht selbstständig lauffähigen Teilprogrammen. Ein derartiges Programm ist in der Lage, insbesondere aus dem Quellcode von Teilprogrammen - hier aus dem Quellcode der Steuerungsteilprogramme - ein Hauptprogramm zu erstellen, vorliegend ein Steuerungshauptprogramm.

Das vorgenannte Programm zur Erstellung des Hauptprogramms kann dann zweckmäßigerweise von der zentralen Recheneinrichtung (automatisch) gestartet werden, nachdem die Steuerungsteilprogramme in der oben beschriebenen Weise an die zentrale Recheneinrichtung übermittelt wurden.

Vorzugsweise wird vor einer Inbetriebnahme der Verpackungsmaschine mindestens ein einem Maschinenmodul zugeordnetes Steuerungsteilprogramm von einem diesem zugeordneten Datenspeicher an die zentrale Recheneinrichtung übermittelt. Dies kann auch automatisch geschehen, beispielsweise unmittelbar nach bzw. ausgelöst durch ein Einschalten der Verpackungsmaschine. Oder automatisch nach dem Einschalten eines Moduls, nachdem es anstelle eines zu ersetzenden Moduls mit der Verpackungsmaschine signal- oder datentechnisch verbunden ist.

Bevorzugt wird nach dem Austausch eines Maschinenmoduls mindestens das diesem zugeordnete Steuerungsteilprogramm von einem diesem zugeordneten Datenspeicher an die zentrale Recheneinrichtung übermittelt. Es kann dabei vorgesehen sein, bei einem Austausch von nur einem Maschinenmodul entweder nur das diesem zugeordnete Steuerungsteilprogramm zu übermitteln oder zusätzlich (ggf. sicherheitshalber) auch die Steuerungsteilprogramme der anderen, nicht getauschten Module; und zwar selbst dann, wenn diese aufgrund einer früheren Übermittlung im Rahmen einer früheren Inbetriebnahme in der zentralen Recheneinrichtung bzw. auf einem dieser zugeordneten Speicher schon vorliegen sollten.

Zweckmäßigerweise können bei/vor der Inbetriebnahme, insbesondere bei/vor einer Erstinbetriebnahme, die zugeordneten Steuerungsteilprogramme der Maschinenmodule von einem gemeinsamen (elektrisch betriebenen) Datenspeicher an die zentrale Recheneinrichtung übermittelt werden, etwa einem zentralen Datenserver (ggf. einem Cloud-Datenserver) oder einzelnen, den jeweiligen Maschinenmodulen jeweils (lokal) zugeordneten Datenspeichern, beispielsweise jeweils zugeordneten NAS-Laufwerken.

Insofern lokale Datenspeicher verwendet werden, kann vorgesehen sein, dass an jedem Maschinenmodul jeweils ein entsprechender, diesem zugeordneter (elektrisch betriebener) Datenspeicher (Festplatte, NAS-Laufwerk etc.) angeordnet ist bzw. an diesem befestigt ist.

Wenn ein allen Modulen gemeinsamer Datenspeicher verwendet wird, ist dieser bevorzugt einem zentralen Rechner zugeordnet oder an diesem angeordnet. Ggf. kann er auch Teil der vorstehend genannten zentralen Recheneinrichtung der Verpackungsmaschine sein.

Bei Verwendung eines für die Maschinenmodule gemeinsamen Datenspeichers ist (auf diesem) bevorzugt zu jedem Maschinenmodul einer Gruppe von für die Verwendung in der Verpackungsmaschine potentiell infrage kommender Maschinenmodule eine das Maschinenmodul jeweils eindeutig identifizierende Identifikationsinformation, insbesondere ein Identifikationscode, abgespeichert. Zu jeder Identifikationsinformation ist des Weiteren eindeutig ein zugeordnetes Steuerungsteilprogramm für das entsprechende Maschinenmodul auf dem Datenspeicher abgespeichert.

Anhand der dann dem jeweiligen Modul zugeordneten Identifikationsinformationen der in der Verpackungsmaschine tatsächlich verwendeten Maschinenmodule, die beispielsweise auf zugeordneten lokalen Datenspeichern der Module auslesbar hinterlegt sein können oder außen an den Modulen auslesbar angebracht sind (oder dergleichen) und zuvor entsprechend ausgelesen werden, werden dann automatisch die diesen jeweils zugeordneten Steuerungsteilprogramme aus dem gemeinsamen Datenspeicher ausgewählt und an die zentrale Recheneinrichtung übermittelt. Die automatische Auswahl kann dabei beispielsweise die zentrale Recheneinrichtung selbst übernehmen, der in diesem Fall zuvor auch die ausgelesenen Identifikationsinformationen übermittelt werden würden.

Zur Übermittlung der Steuerungsteilprogramme an die zentrale Recheneinrichtung sind die Maschinenmodule bevorzugt datentechnisch mit dieser verbunden. Insbesondere können die Maschinenmodule der Verpackungsmaschine zur Übermittlung der Steuerungsteilprogramme mittels eines drahtlosen oder drahtgebundenen Kommunikations- bzw. Datennetzwerkes mit dieser verbunden sein.

Was die zentrale Recheneinrichtung betrifft, so kann sie Teil einer oder der zentralen Steuerungseinrichtung zur Steuerung der Verpackungsmaschine sein, die die Verpackungsmaschine mithilfe des aus den Teilprogrammen zusammengesetzten Steuerungshauptprogramms steuert.

Insbesondere bei Verwendung einer separaten zentralen Recheneinrichtung ist vorzugsweise vorgesehen, dass das Steuerungshauptprogramm über eine geeignete Datenleitung von der zentralen Recheneinrichtung an die zentrale Steuerungseinrichtung übermittelt wird.

Die Steuerungsteilprogramme können in weiterer Ausbildung der Erfindung jeweils ein Teilprogramm zur Steuerung des oder der Antriebe des Maschinenmoduls umfassen und/oder ein Teilprogramm zur Umsetzung von sicherheitsrelevanten Funktionen und/oder ein Teilprogramm zur Visualisierung von Steuerungsinformationen sowie zur Änderung von Betriebsparamtern.

In diesem Zusammenhang wird darauf hingewiesen, dass im Rahmen dieser Anmeldung "und/oder" im Sinne von "und" oder "oder" verwendet wird.

Was die einzelnen Maschinenmodule betrifft, so weist die Verpackungsmaschine jeweils bevorzugt mehrere Maschinenmodule auf, die jeweils über eine Fertigungseinheit zur Durchführung mindestens eines Fertigungsschrittes verfügen.

Die vorgenannten Maschinenmodule können dabei verschiedene Funktionen aufweisen. Wenn es sich bei der Vorrichtung um einen Packer zur Verpackung von Zigaretten in Zigarettenpackungen handelt, etwa einen Hinge-Lid-Packer, kann ein Modul beispielsweise für die Formierung von aus einem Zigarettenmagazin stammenden Zigaretten zu Zigarettengruppen sorgen, ein Modul für das Einhüllen der Zigaretten in einen Innenzuschnitt, wie etwa Stanniol, ein Modul für das Aufbringen eines Kragens auf die in den Innenzuschnitt eingehüllte Zigarettengruppe und ein Modul für das Verpacken des Stanniolblocks in einen Außenzuschnitt, etwa einen Kartonzuschnitt. Die Aufteilung der Vorrichtung in die einzelnen Module kann aber auch auf andere Weise erfolgen. So kann beispielsweise das Außenzuschnittmodul zusätzlich auch noch den sogenannten Kragen aufbringen. Das Formierungsmodul könnte beispielsweise zusätzlich, etwa bei der Herstellung einer Dichtpackung, noch den sogenannten Tray herstellen, der zur Aufnahme der Zigarettengruppe dient und der anschließend in einen Dichtfolien-Innenzuschnitt eingehüllt wird.

Die Moduleigenschaft der Maschinenmodule kann sich unter anderem darin zeigen, dass die Module als eigenständige funktionale bzw. technische Einheiten gebildet sind. Insbesondere können die Elektrik/Elektronik sowie die Antriebe der Maschinenmodule - unter anderem abgesehen von einer Anbindung an eine übergeordnete Maschinensteuerung und eine mögliche übergeordnete Stromversorgung - im Wesentlichen autark strukturiert sein, sodass jedes Fertigungsmodul insofern als komplette Einheit aus der Verpackungsmaschine entfernbar, in diese integrierbar oder durch ein anderes, insbesondere durch ein identisches oder durch ein funktional gleichartiges Modul austauschbar/ersetzbar ist.

Beispielsweise durch das Austauschen von einzelnen Modulen einer solchen Verpackungsmaschine durch funktional gleichartige Module können bei Beibehaltung anderer Module letztlich mit derselben Maschine unterschiedliche Packungstypen hergestellt werden, wie etwa einerseits eine Standard Hinge-Lid-Packung oder anderseits eine Dichtpackung. Bei einem solchen Wechsel von einer ersten Packungsart zu einer zweiten Packungsart können auch zusätzliche Maschinenmodule in die modulare Verpackungsmaschine bzw. in den Fertigungsfluss integriert werden oder einzelne Fertigungsmodule ersatzlos aus der Maschine entfernt werden. Der modulartige Aufbau ermöglicht auch im Rahmen der Wartung oder Reparatur einen schnellen Austausch von einzelnen, von substantiellen Fehlern betroffenen Maschinenmodule durch jeweils identische, fehlerfreie Maschinenmodule.

Die jeweilige Fertigungseinheit verfügt bevorzugt jeweils über mindestens ein, in der Regel mehrere Fertigungsmittel, die zur Durchführung der von dem Fertigungsmodul vorzunehmenden Fertigungsschritte dienen. Der Begriff Fertigungsmittel ist dabei allgemein zu verstehen und umfasst insbesondere Förderer, Faltorgane, Prüforgane, Trennorgane, Siegelorgane, Leimauftragsorgane und dergleichen. Beispielsweise würde die Fertigungseinheit eines Innenzuschnittmoduls über die geeigneten, im Stand der Technik bekannten Fertigungsmittel zum Einhüllen einer Zigarettengruppe in einen Innenzuschnitt verfügen (beispielsweise ggf. Faltorgane zum Falten des Innenzuschnitts, ggf. Trennorgane zum Abtrennen einzelner Innenzuschnitte, ggf. Siegelorgane, ggf. Leimauftragsorgane etc.).

Bevorzugt weisen dabei die Maschinenmodule - wie oben bereits angedeutet - jeweils einen oder mehrere eigene, bevorzugt elektrische bzw. elektronische Antriebe auf, insbesondere Servoantriebe, zum Antrieb von Fertigungsmitteln der Fertigungseinheit.

Gemäß einer weiteren Konkretisierung des Konzeptes der Erfindung ist vorgesehen, dass bei den individuellen Betrieb bzw. Steuerungsablauf/Steuerung eines Maschinenmoduls beeinflussenden Änderungen an dem Steuerungshauptprogramm der Verpackungsmaschine, beispielsweise vorgenommen durch einen Bediener der Verpackungsmaschine, das Steuerungsteilprogramm dieses Maschinenmoduls durch die zentrale Recheneinrichtung automatisch angepasst wird, und dass das geänderte Steuerungsteilprogramm anschließend an den dem Maschinenmodul zugeordneten Datenspeicher übermittelt und dort gespeichert wird.

Das geänderte Steuerungsteilprogramm kann dabei die vorherige Version des Steuerungsteilprogramms ersetzen, sodass das geänderte Steuerungsteilprogramm vor einer entsprechenden Inbetriebnahme der Verpackungsmaschine anstelle der vorherigen Version an die zentrale Recheneinrichtung übermittelt wird. Insbesondere kann die Vorversion auf dem zugeordneten Datenspeicher überschrieben werden.

Eine erfindungsgemäße Verpackungsmaschine mit mehreren Maschinenmodulen weist die Merkmale des Anspruchs 15 auf. Danach verfügt eine solche entsprechend über eine dieser zugeordneten zentralen Recheneinrichtung, wobei jedem Maschinenmodul ein Datenspeicher zugeordnet ist, auf dem ein nicht selbstständig lauffähiges Steuerungsteilprogramm zum Betreiben des jeweiligen Maschinenmoduls abgespeichert ist, wobei der Speicher per drahtloser oder drahtgebundener Datenleitung mit der zentralen Recheneinrichtung verbunden ist, und wobei die zentrale Recheneinrichtung derart ausgebildet ist, dass sie von dem oder den Datenspeicher(n) über die Datenleitung empfangene Steuerungsteilprogramme zu einem (lauffähigen bzw. selbstständig lauffähigen) Steuerungshauptprogramm zur Steuerung der Verpackungsmaschine automatisiert zusammensetzen kann.

Die zentrale Recheneinrichtung kann dabei insbesondere ein (Industrie-)PC sein.

In weiterer konkretisierter Umsetzung dieses Konzepts können die zentrale Recheneinrichtung einerseits und die den Maschinenmodulen jeweils zugeordneten (lokalen) Datenspeicher andererseits an einen gemeinsamen Switch des Datenkommunikationsnetzwerks angeschlossen sein, sodass die Steuerungsteilprogramme wahlweise über das Datenkommunikationsnetzwerk von einem der (lokalen) Datenspeicher an die zentrale Recheneinrichtung übermittelt werden können.

Weitere Merkmale der vorliegenden Erfindung ergeben sich aus den beigefügten Patentansprüchen, der nachfolgenden Beschreibung bevorzugter Ausführungsbeispiele sowie den beigefügten Zeichnungen. Darin zeigt:
- Fig. 1: eine Schrägansicht einer beispielhaften, modular aufgebauten Verpackungsmaschine für Zigaretten,
- Fig. 2: eine teilweise geschnittene Ansicht der Maschine aus Fig. 1 aus Blickrichtung II in Fig. 1,
- Fig. 3: eine schematische Darstellung eines einem der Module zugeordneten Datenspeichers mitsamt darauf gespeicherter Informationen,
- Fig. 4: eine Prinzipdarstellung des Datenflusses von dem Datenspeicher aus Fig. 3 zu einer zentralen Recheneinrichtung der Verpackungsmaschine (drahtgebunden),
- Fig. 5: eine Darstellung entsprechend Fig. 4, wobei der Datenfluss drahtlos erfolgt.

Die Erfindung wird im Folgenden anhand einer modularen Verpackungsmaschine 10 zur Verpackung von Zigaretten oder von Zigarettenpackungen mit in diesem Beispiel fünf Maschinenmodulen 11-15 erläutert. Nämlich anhand einer Verpackungsmaschine zur Herstellung von sogenannten Hinge-Lid-Packungen. Erfindungsgemäß kommt es nicht darauf an, welche Art von Modulen verbaut ist oder welche Art von Packungen hergestellt wird. Die Erfindung kann beispielsweise auch bei modular aufgebauten Maschinen zur Verpackung von einzelnen Zigarettenpackungen in Folienzuschnitte - Cello - verwendet werden, bei Maschinen zur Verpackung von Gruppen von Zigarettenpackungen in Gebindepackungen - Gebindepacker -, bei Kartonpackern oder dergleichen. Bei der folgenden kurzen Beschreibung der Verpackungsmaschine 10 kommt es daher auch nicht entscheidend darauf an, welche Fertigungsschritte in welchem der Module 11-15 durchgeführt werden.

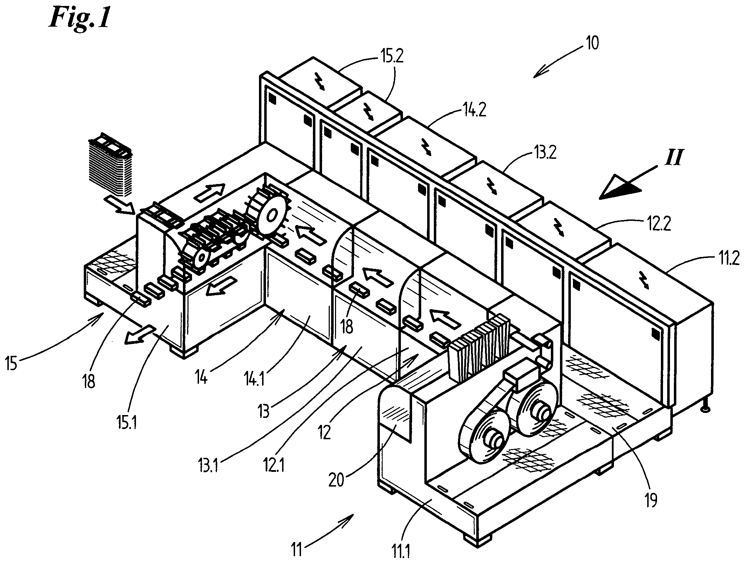

Das im Fertigungsfluss (die Richtung desselben ist durch die drei in U-Form angeordneten Pfeile in Fig. 1 angedeutet) erste Modul 11 kann beispielsweise ein Formierungsmodul sein zum Formieren bzw. Gruppieren von einzelnen, aus einem in Fig. 1 nicht gezeigten Zigarettenmagazin entstammenden Zigaretten zu jeweils einer mehrlagigen, in der Regel dreilagigen Zigarettengruppe.

Nach Formierung der Zigarettengruppen können diese den im Fertigungsfluss stromab nächstfolgenden bzw. benachbart angeordneten Maschinenmodulen 12 zugefördert werden. In den Maschinenmodulen 12 werden dann bestimmte weitere Schritte zur Fertigung der Hinge-Lid-Packung durchgeführt. Von den Maschinenmodulen 12 wird die Zigarettengruppe dann an das nächstfolgende Modul 13 und von dort an das nächstfolgende Modul 14 übergeben. In den Modulen 12-14 werden geeignete Fertigungsschritte durchgeführt, wie etwa das Einhüllen der Zigarettengruppe in einen Innenzuschnitt, wie etwa einen Stanniolzuschnitt, oder - bei einer Dichtpackung - das Einhüllen in eine Dichtfolie.

Das im Fertigungsfluss letzte Modul 15 ist im vorliegenden Ausführungsbeispiel ein Außenzuschnittmodul. In diesem wird zunächst ein sogenannter Kragen auf die eingehüllte Zigarettengruppe aufgelegt und diese zusammen mit dem Kragen in einen Außenzuschnitt aus Karton verpackt. Der Außenzuschnitt bildet die Außenverpackung der fertigen, mit der Bezugsziffer 18 versehenen Zigarettenpackung, die das Außenzuschnittmodul 15 verlässt.

Jedes Maschinenmodul 11-15 verfügt jeweils über eine eigene Fertigungseinheit 11.1-15.1, in der bzw. durch die die geschilderten Fertigungsschritte mittels geeigneter Fertigungsmittel der jeweiligen Fertigungseinheit 11.1-15.1 ausgeführt werden. Die Fertigungsmittel der jeweiligen Fertigungseinheit 11.1-15.1 können unter anderem jeweils ein oder mehrere der im Stand der Technik für die Durchführung dieser Fertigungsschritte bekannten Bearbeitungsorgane umfassen, und/oder ein oder mehrere Förderorgane, und/oder ein oder mehrere Prüforgane oder dergleichen.

Daneben weist jedes Maschinenmodul 11-15 jeweils mindestens einen eigenen Schaltschrank 11.2-15.2 auf. Wie in Fig. 1 zu erkennen ist, verfügt dabei das Außenzuschnittmodul 15 über zwei Schaltschränke 15.2, während die anderen Module 11-14 jeweils nur einen Schaltschrank 11.2-14.2 aufweisen.

In den Schaltschränken 11.2-15.2 ist jeweils die für den Betrieb der jeweiligen Fertigungseinheit 11.1-15.1 des jeweiligen Maschinenmoduls 11-15 erforderliche Elektrik/Elektronik enthalten. Diese kann jeweils ein oder mehrere Steuereinheiten für die Fertigungsmittel einschließen.

Jeweils benachbarte Fertigungsmodule 11-15 grenzen vorliegend unmittelbar aneinander an, insbesondere lückenlos. Sie können insbesondere untereinander trennbar verbunden sein, beispielsweise mit Schraub- und/oder Klemmverbindungen, die sich leicht lösen lassen, um ein Separieren der Fertigungsmodule 11-15 bzw. insbesondere einen Austausch derselben zu ermöglichen. Dies muss aber nicht so sein.

Jede Fertigungseinheit 11.1-15.1 weist ein Gehäuse 20 auf zur Aufnahme sämtlicher oder mindestens eines Teils der Fertigungsmittel der entsprechenden Fertigungseinheit 11.1-15.1. Wie in Fig. 1 gezeigt ist, erstreckt sich ein Laufweg 19 im Ergebnis in U-Form um die Rückseiten der Fertigungseinheiten 11.1-15.1 bzw. dieser Gehäuse 20.

In besonderer Weise sind die Maschinenmodule 11-15 datentechnisch mit einer zentralen Recheneinrichtung 21 der Verpackungsmaschine 10 verbunden.

Exemplarisch ist im vorliegenden Fall dem Modul 12 eine zentrale Recheneinrichtung 21 zugeordnet. Diese könnte natürlich auch einem anderen Modul zugeordnet sein oder eine separate Einheit bilden.

Die zentrale Recheneinrichtung 21 ist an dem Maschinenmodul 12 befestigt, vorliegend in dessen Schaltschrank 12.2 integriert.

Die zentrale Recheneinrichtung kann ein Industrie-PC sein. Weiter ist das Maschinenmodul 12 eine Hauptsteuerung mit einem Hauptsteuerungsmodul für die übergeordnete Steuerung der Prozessabläufe der Verpackungsmaschine 10 zugeordnet. Ggf. kann der (Industrie-)PC auch gleichzeitig das Hauptsteuerungsmodul bilden. Die zentrale Recheneinrichtung kann (auch) eine separate, mit der Hauptsteuerung über eine geeignete Datenleitung verbundene, von dieser entfernt angeordnete Einheit sein. Es sind viele Varianten denkbar.

Die zentrale Recheneinrichtung 21 ist über eine Datenleitung 22 bidirektional mit einem (intelligenten) Switch 23 verbunden. An den Switch 23 sind über Datenleitungen 24 jeweils lokale Datenspeicher 25 der einzelnen Module 11-15 angeschlossen. Die Datenleitungen 22, 24 sowie der Switch 23 und die Datenspeicher 25 bilden insgesamt ein Datennetzwerk, beispielswese ein Ethernet-Netzwerk. Mit anderen Worten kann zwischen jedem Datenspeicher 25 jedes Moduls 11-15 und der zentralen Recheneinrichtung 21 eine bidirektionale Datenverbindung aufgebaut werden (je nach Schaltzustand des Switches), um Daten bidirektional übertragen zu können.

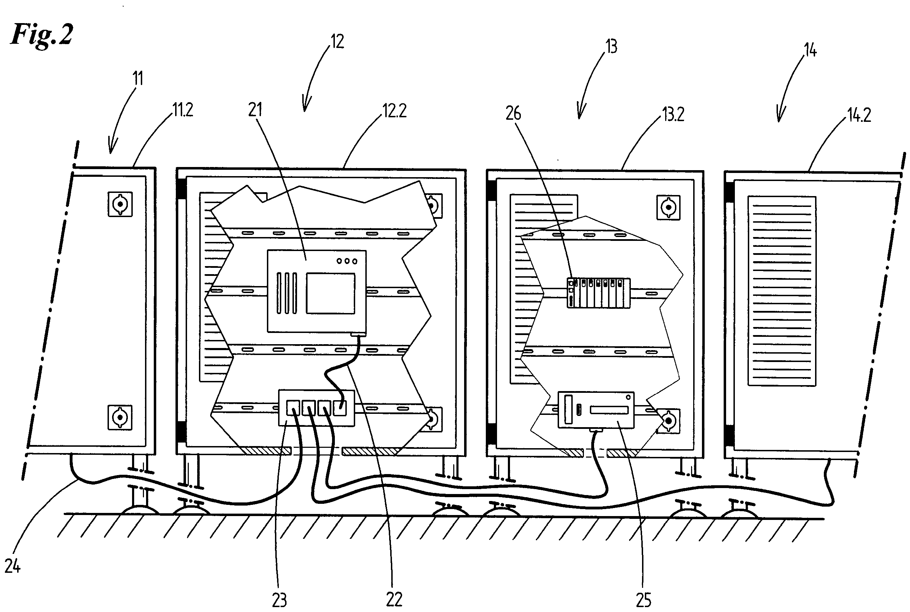

Den Modulen 11-15 sind jeweils lokale Steuerungen bzw. Steuerungseinheiten zugeordnet, die die auf dem Modul 11-15 ablaufenden Prozesse in Abstimmung mit der übergeordneten Hauptsteuerung 21 steuern. Zur Übertragung von Steuerungssignalen an die lokalen Steuerungen der Module 11-15 ist die Hauptsteuerung mittels entsprechenden Signalübertragungsleitungen mit den lokalen Steuerungen der einzelnen Module 11-15 verbunden. Diese Signalleitungen können beispielsweise Teil eines Feldbussystems sein, eines EtherCAT-Systems oder es kann sich auch um einfache Steuerungsleitungen mit serieller analoger oder digitaler Signalübertragung handeln. Symbolisch ist in Fig. 2 ein Buskoppler 26 als Teil eines Bussystems gezeigt.

Im Betrieb der Verpackungsmaschine 10 steuert die Hauptsteuerung mittels eines Steuerungshauptprogramms 29 die übergeordneten Steuerungsprozesse der einzelnen Module 11-15 bzw. koordiniert die einzelnen Prozesse in an sich bekannter Weise. Zu diesem Zweck werden sämtliche auf den Modulen 11-15 ablaufenden Prozesse zeitlich und inhaltlich in bekannter Weise (aufeinander) abgestimmt.

Bei einer solchen, aus einzelnen Modulen aufgebauten Maschine 10 ist eine flexible, automatische Anpassung ihres Steuerungssystems wünschenswert. Insbesondere (aber nicht nur) wenn ein Modul durch ein gleichartiges, ähnliches oder anderes Modul ersetzt wird, ist daher erfindungsgemäß vorgesehen, dass das Steuerungshauptprogramm 29 der Hauptsteuerung 21 vor bzw. bei der Inbetriebnahme der Maschine 10 automatisch angepasst wird.

Zu diesem Zweck setzt die dieser zugeordnete zentrale Recheneinrichtung 21 bei oder vor einer Inbetriebnahme der Verpackungsmaschine 10 den Maschinenmodulen 11-15 jeweils eindeutig zugeordnete (vorliegend nicht selbstständig lauffähige) Modulsteuerungsprogramme bzw. Steuerungsteilprogramme 27 zum Betreiben des jeweiligen Maschinenmoduls 11-15 automatisiert zu dem Steuerungshauptprogramm 29 zusammen und übermittelt dieses der Hauptsteuerung 21. Hierfür sind die einzelnen Steuerungsteilprogramme 27 zunächst auf den einzelnen Datenspeichern 25 der Module 11-15 lokal gespeichert.

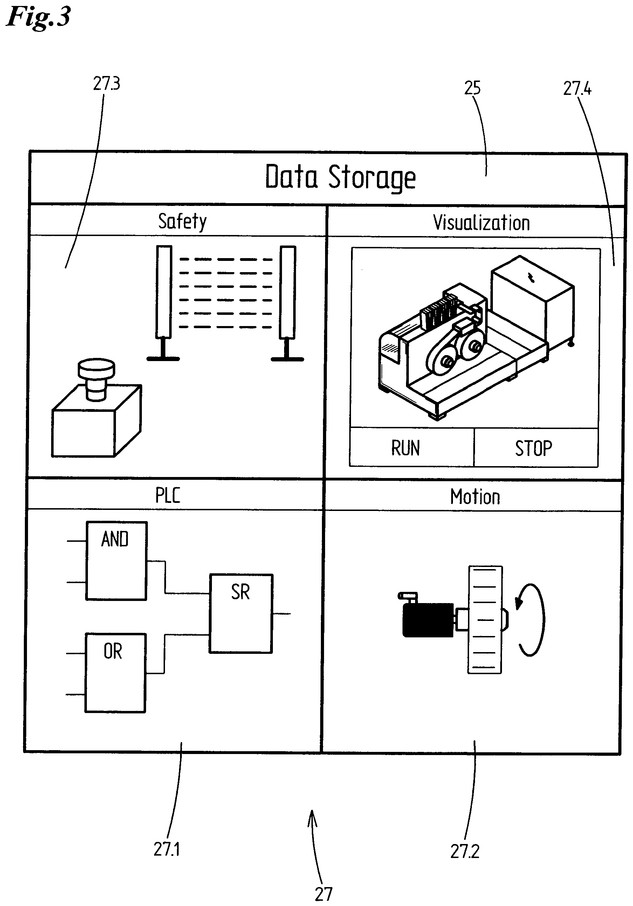

Jedes Steuerungsteilprogramm 27 kann dabei mehrere Teilkomponenten umfassen, vgl. Fig. 3. Beispielsweise eine Teilkomponente 27.1, die originär für die Abarbeitung logischer Steuerungsprozesse in Echtzeit (mittels SPS oder dergleichen) des jeweiligen Moduls 11-15 zuständig ist. Daneben kann als weitere Teilkomponente ein Antriebssteuerungsprogramm 27.2, eine Sicherheitssteuerungskomponente 27.3 sowie eine Visualisierungskomponente 27.4 vorhanden sein.

Bei/vor einer Erstinbetriebnahme der Maschine 10 werden dann der zentralen Recheneinrichtung 21 die Steuerungsteilprogramme 27 sämtlicher Module 11-15 übermittelt.

Nach dem Austausch eines oder mehrerer Maschinenmodule 11-15 ist vorgesehen, dass jedenfalls mindestens das auf dem Datenspeicher 25 des jeweiligen Austauschmoduls vorhandene Steuerungsteilprogramm 27 (vollständig oder teilweise) an die zentrale Recheneinrichtung 21 übermittelt wird, und zwar über die entsprechenden Datenleitungen 22, 24. In der Regel liegen der zentralen Recheneinrichtung 21 in einem solchen Fall die Steuerungsteilprogramme 27 der anderen Module 11-15, die nicht ausgetauscht werden, bereits vor, sodass deren Übermittlung nicht erneut erfolgen muss. Es kann aber natürlich vorgesehen sein, auch in einem solchen Fall sämtliche Steuerungsteilprogramme 27 der einzelnen Module 11-15 (ggf. erneut) zu übermitteln.

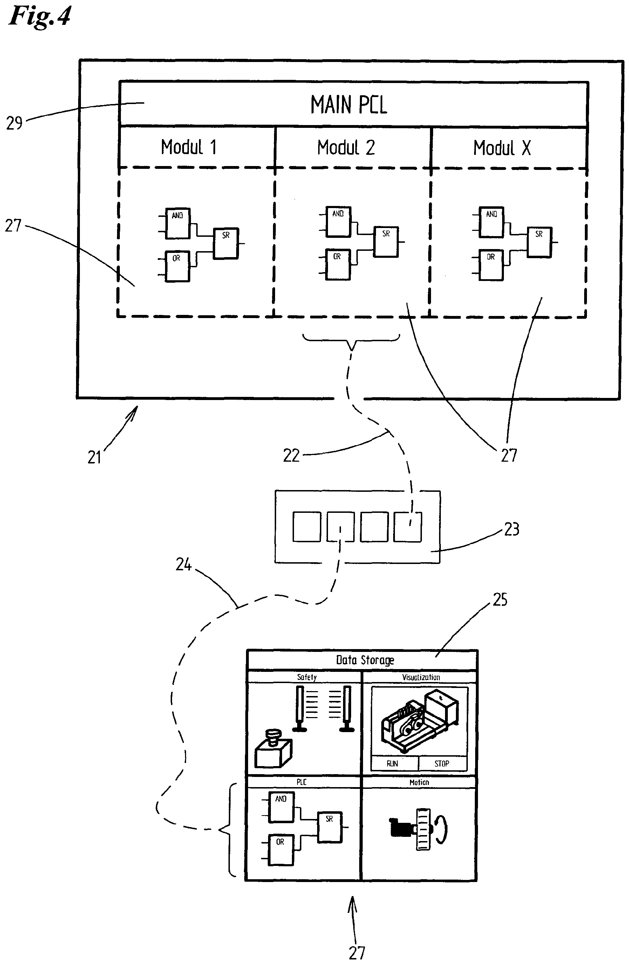

Die zentrale Recheneinrichtung 21 setzt die Steuerungsteilprogramme 27 dann automatisiert zu einem Steuerungshauptprogramm 29 zur Steuerung der gesamten Verpackungsmaschine 10 zusammen, vgl. Fig. 4. Wie grundsätzlich automatisch und rechnergestützt aus einzelnen Teilprogrammen ein lauffähiges Gesamtprogramm zusammengesetzt werden kann, ist dem Fachmann grundsätzlich geläufig. Zu diesem Zweck verfügt die zentrale Recheneinrichtung 21 über ein entsprechend für den vorliegenden Anwendungsfall individualisiertes, im Stand der Technik im grundsätzlichen Aufbau bzw. der grundsätzlichen Funktionsweise allerdings bekanntes Programm zur (automatischen) Erstellung eines Hauptprogramms aus einzelnen Teilprogrammen. Ein derartiges Programm ist in der Lage, insbesondere aus dem Quellcode von Teilprogrammen - hier aus dem Quellcode der Steuerungsteilprogramme 27 - ein Hauptprogramm zu erstellen, vorliegend das Steuerungshauptprogramm 29.

Das vorgenannte Programm zur Erstellung des Steuerungshauptprogramms 27 wird vorliegend zweckmäßigerweise von der zentralen Recheneinrichtung 21 (automatisch) gestartet, nachdem die Steuerungsteilprogramme 27 in der oben beschriebenen Weise an die zentrale Recheneinrichtung 21 übermittelt wurden.

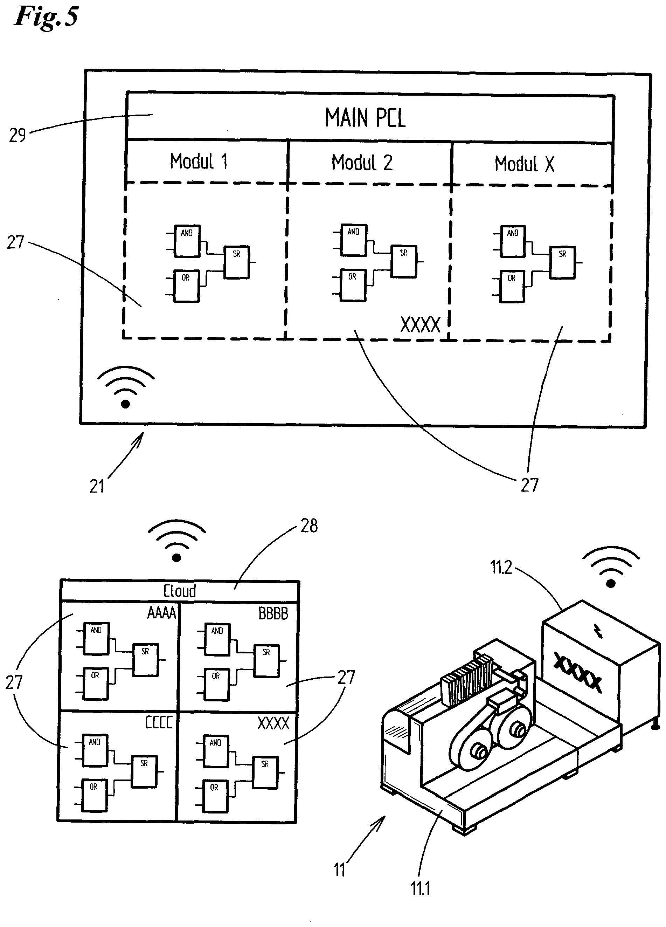

Fig. 5 zeigt schließlich symbolisch, dass die Anbindung der einzelnen Module 11-15 an die zentrale Recheneinrichtung 21 auch drahtungebunden bzw. drahtlos über Funkdatenleitungen oder dergleichen erfolgen kann.

Ebenso ist angedeutet, dass die Steuerungsteilprogramme 27 nicht zwingend auf lokalen Datenspeichern 25 gespeichert sein müssen, die jeweils unmittelbar an dem jeweiligen Modul 11-15 befestigt bzw. angeordnet sind, sondern dass diese auch auf einem gemeinsamen, datentechnisch mit der zentralen Recheneinrichtung 21 verbundenen oder verbindbaren Datenspeicher 28 hinterlegt sein können, etwa einem sogenannten Cloud-Datenspeicher. Die Steuerungsteilprogramme 27 würden dann jeweils drahtlos von der zentralen Recheneinrichtung 21 bei Bedarf von dem gemeinsamen Speicher 28 abgerufen bzw. heruntergeladen werden.

Zu diesem Zweck kann vorgesehen sein, dass in dem gemeinsamen Datenspeicher (in einer auf dieser hinterlegten Datenbank) zu jedem Maschinenmodul 11-15 eine das Maschinenmodul 11-15 jeweils eindeutig identifizierende Identifikationsinformation, insbesondere ein Identifikationscode, abgespeichert ist. Zu jeder Identifikationsinformation wiederum ist des Weiteren eindeutig ein zugeordnetes Steuerungsteilprogramm 27 für das entsprechende Maschinenmodul 11-15 in dem Datenspeicher abgespeichert. Anhand der Identifikationsinformationen der in der Verpackungsmaschine 10 dann tatsächlich verwendeten Maschinenmodule 11-15 werden dann die diesen jeweils zugeordneten Steuerungsteilprogramme 27 aus dem Datenspeicher 28 ausgewählt und an die zentrale Recheneinrichtung 21 übermittelt.

### Bezugszeichenliste

- 10: Verpackungsmaschine
- 11: Maschinenmodul
- 11.1: Fertigungseinheit
- 11.2: Schaltschrank
- 12: Maschinenmodul
- 12.1: Fertigungseinheit
- 12.2: Schaltschrank
- 13: Maschinenmodul
- 13.1: Fertigungseinheit
- 13.2: Schaltschrank
- 14: Maschinenmodul
- 14.1: Fertigungseinheit
- 14.2: Schaltschrank
- 15: Maschinenmodul
- 15.1: Fertigungseinheit
- 15.2: Schaltschrank
- 18: Zigarettenpackung
- 19: Laufweg
- 20: Gehäuse
- 21: Zentrale Recheneinrichtung
- 22: Datenleitung
- 23: Switch
- 24: Datenleitung
- 25: Datenspeicher
- 26: Buskoppler
- 27: Steuerungsteilprogramm
- 27.1: Modulsteuerungskomponente
- 27.2: Antriebssteuerungskomponente
- 27.3: Sicherheitssteuerungskomponente
- 27.4: Visualisierung
- 28: Cloud-Datenspeicher
- 29: Steuerungshauptprogramm

## Patentansprüche

1. Verfahren zum Bereitstellen eines Steuerungsprogramms für eine Verpackungsmaschine (10) aus mehreren Maschinenmodulen, insbesondere eine Verpackungsmaschine zur Herstellung von Verpackungen für Tabakprodukte, **dadurch gekennzeichnet, dass** bei oder vor einer Inbetriebnahme der Verpackungsmaschine (10), insbesondere bei oder vor einer Inbetriebnahme nach einem Austausch eines Maschinenmoduls oder bei oder vor einer Erstinbetriebnahme, den Maschinenmodulen jeweils eindeutig zugeordnete, nicht selbstständig lauffähige Steuerungsteilprogramme (27) zum Betreiben des jeweiligen Maschinenmoduls mithilfe einer der Verpackungsmaschine (10) zugeordneten zentralen Recheneinrichtung automatisiert zu einem Steuerungshauptprogramm (29) zur Steuerung der Verpackungsmaschine (10) zusammengesetzt werden.

2. Verfahren gemäß Anspruch 1, **dadurch gekennzeichnet, dass** bei oder vor einer Inbetriebnahme mindestens ein einem Maschinenmodul zugeordnetes Steuerungsteilprogramm (27) von einem diesem zugeordneten Datenspeicher (25, 28) an die zentrale Recheneinrichtung übermittelt wird.

3. Verfahren gemäß Anspruch 2, **dadurch gekennzeichnet, dass** nach einem Austausch eines Maschinenmoduls mindestens das diesem zugeordnete Steuerungsteilprogramm (27) von einem diesem zugeordneten Datenspeicher (25, 28) an die zentrale Recheneinrichtung übermittelt wird.

4. Verfahren gemäß Anspruch 2 oder 3, **dadurch gekennzeichnet, dass** bei oder vor Inbetriebnahme, insbesondere bei oder vor einer Erstinbetriebnahme, die zugeordneten Steuerungsteilprogramme (27) der Maschinenmodule von einem den Maschinenmodulen zugeordneten, gemeinsamen Datenspeicher (28) oder von einzelnen, den jeweiligen Maschinenmodulen jeweils zugeordneten Datenspeichern (25) an die zentrale Recheneinrichtung übermittelt werden.

5. Verfahren gemäß einem oder mehreren der vorhergehenden Ansprüche, **dadurch gekennzeichnet, dass** der dem jeweiligen Maschinenmodul zugeordnete Datenspeicher ein an dem jeweiligen Maschinenmodul jeweils angeordneter, einzelner Datenspeicher (25) ist oder ein gemeinsamer Datenspeicher (28), insbesondere ein einem zentralen Rechner zugeordneter, insbesondere an diesem angeordneter Datenspeicher (28).

6. Verfahren gemäß einem oder mehreren der vorhergehenden Ansprüche, **dadurch gekennzeichnet, dass** die zentrale Recheneinrichtung das Steuerungshauptprogramm (29) aus den Steuerungsteilprogrammen (27), insbesondere aus dem jeweiligen Quellcode der jeweiligen Steuerungsteilprogramme (27), mittels eines Programms zur Erstellung eines Hauptprogramms aus einzelnen, insbesondere nicht selbstständig lauffähigen Teilprogrammen zusammensetzt.

7. Verfahren gemäß Anspruch 6, **dadurch gekennzeichnet, dass** das Programm zur Erstellung eines Hauptprogramms von der zentralen Recheneinrichtung automatisch gestartet wird, nachdem die Steuerungsteilprogramme (27) an die zentrale Recheneinrichtung übermittelt wurden.

8. Verfahren gemäß einem oder mehreren der vorhergehenden Ansprüche, **dadurch gekennzeichnet, dass** die Maschinenmodule der Verpackungsmaschine (10) zur Übermittlung der Steuerungsteilprogramme (27) mittels eines drahtlosen oder drahtgebundenen Kommunikationsnetzwerkes mit der zentralen Recheneinrichtung verbunden sind.

9. Verfahren gemäß einem oder mehreren der vorhergehenden Ansprüche, **dadurch gekennzeichnet, dass** die Recheneinrichtung Teil einer zentralen Steuereinrichtung zur Steuerung der Verpackungsmaschine (10) ist, die die Verpackungsmaschine (10) mithilfe des Steuerungshauptprogramms (29) steuert.

10. Verfahren gemäß einem oder mehreren der vorhergehenden Ansprüche, **dadurch gekennzeichnet, dass** das Steuerungshauptprogramm (29) von der zentralen Recheneinrichtung an die zentrale Steuerung übermittelt wird.

11. Verfahren gemäß einem oder mehreren der vorhergehenden Ansprüche, **dadurch gekennzeichnet, dass** die Steuerungsteilprogramme (27) jeweils ein Teilprogramm zur Steuerung des oder der Antriebe des Maschinenmoduls umfassen und/oder ein Teilprogramm zur Umsetzung von sicherheitsrelevanten Funktionen und/oder ein Teilprogramm zur Visualisierung von Steuerungsinformationen sowie zur Änderung von Betriebsparametern.

12. Verfahren gemäß einem oder mehreren der vorhergehenden Ansprüche, **dadurch gekennzeichnet, dass** bei den Steuerungsablauf eines Maschinenmoduls beeinflussenden Änderungen an dem Steuerungshauptprogramm (29), insbesondere vorgenommen durch einen Bediener, das Steuerungsteilprogramm (27) dieses Maschinenmoduls durch die zentrale Recheneinrichtung automatisch angepasst wird, und dass das geänderte Steuerungsteilprogramm (27) an den dem Maschinenmodul zugeordneten Speicher (25, 28) übermittelt und dort gespeichert wird.

13. Verfahren gemäß Anspruch 12, **dadurch gekennzeichnet, dass** das geänderte Steuerungsteilprogramm (27) die vorherige Version des Steuerungsteilprogramms (27) ersetzt, sodass das geänderte Steuerungsteilprogramm (27) bei oder vor einer entsprechenden Inbetriebnahme der Verpackungsmaschine (10) anstelle der vorherigen Version an die zentrale Recheneinrichtung übermittelt wird.

14. Verfahren gemäß einem oder mehreren der vorhergehenden Ansprüche, **dadurch gekennzeichnet, dass** bei Verwendung eines für die Maschinenmodule gemeinsamen Datenspeichers (28) zu jedem Maschinenmodul einer Gruppe von für die Verwendung in der Verpackungsmaschine (10) potentiell infrage kommender Maschinenmodule eine das Maschinenmodul jeweils eindeutig identifizierende Identifikationsinformation, insbesondere ein Identifikationscode, abgespeichert ist, dass zu jeder Identifikationsinformation eindeutig ein zugeordnetes Steuerungsteilprogramm (27) für das entsprechende Maschinenmodul auf dem Datenspeicher (28) abgespeichert ist, und dass anhand der Identifikationsinformationen der in der Verpackungsmaschine (10) tatsächlich verwendeten Maschinenmodule die diesen jeweils zugeordneten Steuerungsteilprogrammen (27) aus dem Datenspeicher (28) ausgewählt und an die zentrale Recheneinrichtung übermittelt werden.

15. Verpackungsmaschine mit mehreren Maschinenmodulen, insbesondere Verpackungsmaschine (10) zur Herstellung von Verpackungen für Tabakprodukte, mit einer dieser zugeordneten zentralen Recheneinrichtung, insbesondere einem (Industrie-)PC, wobei jedem Maschinenmodul ein Datenspeicher (25, 28) zugeordnet ist, wobei der Speicher (25, 28) per drahtloser oder drahtgebundener Datenleitung mit der zentralen Recheneinrichtung verbunden ist, **dadurch gekennzeichnet, dass** auf dem Datenspeicher (25, 28) ein nicht selbstständig lauffähiges Steuerungsteilprogramm (27) zum Betreiben des jeweiligen Maschinenmoduls abgespeichert ist, wobei die zentrale Recheneinrichtung derart ausgebildet ist, dass sie von dem oder den Datenspeicher(n) über die Datenleitung empfangene Steuerungsteilprogramme (27) zu einem Steuerungshauptprogramm (29) zur Steuerung der Verpackungsmaschine (10) automatisiert zusammensetzen kann.

16. Verpackungsmaschine gemäß Anspruch 15, **dadurch gekennzeichnet, dass** jedem Maschinenmodul ein eigener, an diesem angeordneten Datenspeicher (25) zugeordnet ist, und dass jedes Maschinenmodul über ein insbesondere bidirektional aufgebautes Datenkommunikationsnetzwerk mit der zentralen Recheneinrichtung verbunden ist.

17. Verpackungsmaschine gemäß Anspruch 16, **dadurch gekennzeichnet, dass** die zentrale Recheneinrichtung einerseits und die den Maschinenmodulen jeweils zugeordneten Datenspeicher (25, 28) andererseits an einen Switch des Datenkommunikationsnetzwerks angeschlossen sind, sodass die Steuerungsteilprogramme (27) wahlweise über das Datenkommunikationsnetzwerk von einem der Datenspeicher (25, 28) an die zentrale Recheneinrichtung übermittelt werden können.

18. Verpackungsmaschine gemäß einem oder mehreren der vorhergehenden Ansprüche 15-17, **dadurch gekennzeichnet, dass** jedes Maschinenmodul über mindestens einen Servomotor zum Antrieb mindestens eines bewegbaren Organs verfügt.

## Claims

1. Method for providing a control program for a packaging machine (10) composed of a plurality of machine modules, in particular a packing machine for producing packages for tobacco products, **characterized in that**, when or before the packaging machine (10) is started up, in particular at or before a startup after a machine module has been replaced or at or before an initial startup, component control programs (27), which cannot run independently, are respectively individually assigned to the machine modules and have the purpose of operating the respective machine module, are combined in an automated fashion, using a central computing device which is assigned to the packaging machine (10), to form a main control program (29) for controlling the packaging machine (10).

2. Method according to Claim 1, **characterized in that**, at or before a startup, at least one component control program (27) which is assigned to a machine module is transferred from a data memory (25, 28), which is assigned to said program, to the central computing device.

3. Method according to Claim 2, **characterized in that**, after a machine module has been replaced, at least the component control program (27) which is assigned thereto is transferred from a data memory (25, 28), which is assigned thereto, to the central computing device.

4. Method according to Claim 2 or 3, **characterized in that**, at or before the startup, in particular at or before an initial startup, the assigned component control programs (27) of the machine modules are transferred from a common data memory (28), assigned to the machine modules, or from individual data memories (25), respectively assigned to the respective machine modules, to the central computing device.

5. Method according to one or more of the preceding claims, **characterized in that** the data memory which is assigned to the respective machine module is an individual data memory (25) which is respectively arranged on the respective machine module, or a common data memory (28), in particular a data memory (28) which is assigned to a central computer, in particular arranged thereon.

6. Method according to one or more of the preceding claims, **characterized in that** the central computing device combines the main control program (29) from the component control programs (27), in particular from the respective source code of the respective component control programs (27), by means of a program for producing a main program from individual component programs, which are, in particular, not able to run independently.

7. Method according to Claim 6, **characterized in that** the program for producing a main program is started automatically by the central computing device after the component control programs (27) have been transferred to the central computing device.

8. Method according to one or more of the preceding claims, **characterized in that** the machine modules of the packaging machine (10) are connected to the central computing device for the purpose of transferring the component control programs (27) by means of a wireless or wired communication network.

9. Method according to one or more of the preceding claims, **characterized in that** the computing device is part of a central control device for controlling the packaging machine (10) which controls the packaging machine (10) using the main control program (29).

10. Method according to one or more of the preceding claims, **characterized in that** the main control program (29) is transferred from the central computing device to the central controller.

11. Method according to one or more of the preceding claims, **characterized in that** the component control programs (27) each comprise a component program controlling the drive or drives of the machine module, and/or a component program for converting safety-relevant functions and/or a component program for visualising control information and for changing operating parameters.

12. Method according to one or more of the preceding claims, **characterized in that**, when there are changes in the main control program (29) which influence the control sequence of a machine module, in particular changes which are made by an operator, the component control program (27) of this machine module is automatically adapted by means of the central computing device, and **in that** the changed component control program (27) is transferred to the memory (25, 28), which is assigned to the machine module, and is stored in said memory.

13. Method according to Claim 12, **characterized in that** the changed component control program (27) replaces the previous version of the component control program (27) so that, at or before a corresponding startup of the packaging machine (10), the changed component control program (27) is transferred, instead of the previous version, to the central computing device.

14. Method according to one or more of the preceding claims, **characterized in that**, when a data memory (28) which is common to the machine modules is used for each machine module of a group of machine modules which are potentially possible for use in the packing machine (10), identification information, in particular an identification code, which respectively uniquely identifies the machine module, is stored, **in that** an assigned component control program (27) for the corresponding machine module is stored in the data memory (28) uniquely for each identification information item, and **in that**, on the basis of the identification information of the machine modules which are actually used in the packaging machine (10), the component control programs (27) which are respectively assigned to said modules are selected from the data memory (28) and transferred to the central computing device.

15. Packaging machine having a plurality of machine modules, in particular packaging machine (10) for producing packages for tobacco products, having a central computing device which is assigned thereto, in particular an (industrial) PC, wherein each machine module is assigned a data memory (25, 28), wherein the memory (25, 28) is connected by a wireless data link or wired data line to the central computing device, **characterized in that** a component control program (27), which cannot run independently and which is intended for operating the respective machine module, is stored in the data memory (25, 28), wherein the central computing device is embodied in such a way that it can combine, in an automated fashion, component control programs (27) received from the data memory or memories via the data link or line, to form a main control program (29) for controlling the packaging machine (10).

16. Packaging machine according to Claim 15, **characterized in that** each machine module is assigned a separate data memory (25) which is arranged thereon, and **in that** each machine module is connected to the central computing device via a data communication network which is, in particular, constructed in a bidirectional fashion.

17. Packaging machine according to Claim 16, **characterized in that** both the central computing device and the data memories (25, 28), which are respectively assigned to the machine modules, are connected to a switch of the data communication network, so that the component control programs (27) can optionally be transferred from one of the data memories (25, 28) to the central computing device via the data communication network.

18. Packaging machine according to one or more of the preceding Claims 15-17, **characterized in that** each machine module has at least one servomotor for driving at least one movable element.

## Revendications

1. Procédé de préparation d'un programme de commande pour une machine d'emballage (10) composée de plusieurs modules de machine, en particulier une machine d'emballage destinée à fabriquer des emballages pour des produits du tabac, **caractérisé en ce que** lors d'une ou avant une mise en service de la machine d'emballage (10), en particulier lors d'une ou avant une mise en service après un remplacement d'un module de machine ou lors d'une ou avant une première mise en service, des programmes partiels de commande (27) respectivement affectés de manière univoque aux modules de machine et non exécutables individuellement, destinés à faire fonctionner le module de machine respectif, sont assemblés de manière automatisée à l'aide d'un dispositif de calcul central affecté à la machine d'emballage (10) en un programme principal de commande (29) destiné à commander la machine d'emballage (10).

2. Procédé selon la revendication 1, **caractérisé en ce que** lors d'une ou avant une mise en service, au moins un programme partiel de commande (27), affecté à un module de machine, est transmis au dispositif de calcul central par une mémoire de données (25, 28) qui affectée audit module.

3. Procédé selon la revendication 2, **caractérisé en ce qu'**après un échange d'un module de machine, au moins le programme partiel de commande (27) affecté à celui-ci est transmis au dispositif de calcul central par une mémoire de données (25, 28) affectée au module.

4. Procédé selon la revendication 2 ou 3, **caractérisé en ce que** lors d'une ou avant la mise en service, en particulier lors d'une ou avant une première mise en service, les programmes partiels de commande (27) affectés des modules de machine sont transmis au dispositif de calcul central à partir d'une mémoire de données commune (28), affectée aux modules de machine, ou à partir de mémoires de données individuelles (25), respectivement affectées aux modules de machine respectifs.

5. Procédé selon une ou plusieurs des revendications précédentes, **caractérisé en ce que** la mémoire de données affectée au module de machine respectif est une mémoire de données individuelle (25), disposée respectivement sur le module de machine respectif, ou est une mémoire de données commune (28), en particulier une mémoire de données (28) affectée à un calculateur central, en particulier disposée sur celui-ci.

6. Procédé selon une ou plusieurs des revendications précédentes, **caractérisé en ce que** le dispositif de calcul central assemble le programme principal de commande (29) à partir des programmes partiels de commande (27), en particulier à partir du code source respectif des programmes partiels de commande (27) respectifs, au moyen d'un programme destiné à créer un programme principal à partir de programmes partiels individuels, en particulier non exécutables indépendamment.

7. Procédé selon la revendication 6, **caractérisé en ce que** le programme destiné à créer un programme principal est démarré automatiquement par le dispositif de calcul central après que les programmes partiels de commande (27) ont été transmis au dispositif de calcul central.

8. Procédé selon une ou plusieurs des revendications précédentes, **caractérisé en ce que** les modules de machine de la machine d'emballage (10) sont reliés au dispositif de calcul central pour la transmission des programmes partiels de commande (27) au moyen d'un réseau de communication avec ou sans fil.

9. Procédé selon une ou plusieurs des revendications précédentes, **caractérisé en ce que** le dispositif de calcul fait partie d'un dispositif de commande central destiné à commander la machine d'emballage (10) qui commande la machine d'emballage (10) à l'aide du programme principal de commande (29).

10. Procédé selon une ou plusieurs des revendications précédentes, **caractérisé en ce que** le programme principal de commande (29) est transmis à la commande centrale par le dispositif de calcul central.

11. Procédé selon une ou plusieurs des revendications précédentes, **caractérisé en ce que** les programmes partiels de commande (27) comprennent respectivement un programme partiel destiné à commander le (s) entraînement(s) du module de machine et/ou un programme partiel destiné à mettre en œuvre des fonctions importantes pour la sécurité et/ou un programme partiel destiné à visualiser des informations de commande et à modifier des paramètres de fonctionnement.

12. Procédé selon une ou plusieurs des revendications précédentes, **caractérisé en ce que** pour des modifications du programme principal de commande (29) influençant le déroulement de commande d'un module de machine, en particulier effectuées par un utilisateur, le programme partiel de commande (27) de ce module de machine est adapté automatiquement par le dispositif de calcul central, et **en ce que** le programme partiel de commande modifié (27) est transmis à la mémoire (25, 28) affectée au module de machine et y est stocké.

13. Procédé selon la revendication 12, **caractérisé en ce que** le programme partiel de commande (27) modifié remplace la version précédente du programme partiel de commande (27) de sorte que le programme partiel de commande (27) modifié, lors d'une ou avant une mise en service correspondante de la machine d'emballage (10), est transmis au dispositif de calcul central au lieu de la version précédente.

14. Procédé selon une ou plusieurs des revendications précédentes, **caractérisé en ce que** lors d'une utilisation d'une mémoire de données (28) commune aux modules de machine, pour chaque module de machine d'un groupe de modules de machine potentiellement envisageables pour l'utilisation dans la machine d'emballage (10), une information d'identification identifiant le module de machine respectivement de manière univoque, en particulier un code d'identification, est stockée, **en ce que** pour chaque information d'identification, un programme partiel de commande (27) affecté de manière univoque est stocké dans la mémoire de données (28) pour le module de machine correspondant, et **en ce qu'**à l'aide des informations d'identification des modules de machine réellement utilisés dans la machine d'emballage (10), les programmes partiels de commande (27) respectivement affectés à ceux-ci, sont sélectionnés dans la mémoire de données (28) et transmis au dispositif de calcul central.

15. Machine d'emballage comprenant plusieurs modules de machine, en particulier une machine d'emballage (10) destinée à fabriquer des emballages pour des produits du tabac, comprenant un dispositif de calcul central affecté à celle-ci, en particulier un PC (industriel), dans laquelle une mémoire de données (25, 28) est affectée à chaque module de machine, la mémoire (25, 28) étant reliée au dispositif de calcul central par une ligne de données avec ou sans, **caractérisée en ce que** dans la mémoire de données (25, 28), un programme partiel de commande (27), non exécutable indépendamment, destiné à faire fonctionner le module de machine respectif est stocké, le dispositif de calcul central étant réalisé de telle sorte qu'il peut assembler de manière automatisée des programmes partiels de commande (27), reçus de la ou des mémoires de données par la ligne de données, en un programme principal de commande (29) destiné à commander la machine d'emballage (10).

16. Machine d'emballage selon la revendication 15, **caractérisée en ce qu'**une mémoire de données (25) disposée sur chaque module de machine est affectée à celui-ci, et **en ce que** chaque module de machine est relié au dispositif de calcul central par un réseau de communication de données, en particulier à structure bidirectionnelle.

17. Machine d'emballage selon la revendication 16, **caractérisée en ce que** le dispositif de calcul central d'une part et les mémoires de données (25, 28) respectivement affectées aux modules de machine d'autre part sont connectés à un commutateur du réseau de communication de données de sorte que les programmes partiels de commande (27) peuvent être transmis au dispositif de calcul central par l'intermédiaire du réseau de communication de données au choix par l'une des mémoires de données (25, 28).

18. Machine d'emballage selon une ou plusieurs des revendications précédentes 15 à 17, **caractérisée en ce que** chaque module de machine dispose au moins d'un servomoteur destiné à entraîner au moins un organe mobile.
